Europäisches Patentamt

**European Patent Office**

Office européen des brevets

(11) Publication number: **0 268 310**
**B1**

(12) # EUROPEAN PATENT SPECIFICATION

(45) Date of publication of the patent specification:
**19.09.90**

(51) Int. Cl.⁵: **F16C 33/80**

(21) Application number: **87201886.6**

(22) Date of filing: **02.10.87**

(54) **Protection shielding for rolling bearings.**

(30) Priority: **13.11.86 IT 5407886 U**

(43) Date of publication of application:
**25.05.88 Bulletin 88/21**

(45) Publication of the grant of the patent:
**19.09.90 Bulletin 90/38**

(84) Designated Contracting States:
**DE FR GB SE**

(56) References cited:
**DE-A- 1 525 188**
**FR-A- 1 488 023**
**US-A- 4 591 278**

(73) Proprietor: **RIV-SKF OFFICINE DI VILLAR PEROSA S.p.A, Via Mazzini 53, I-10123 Torino(IT)**

(72) Inventor: **Bermond, Gabriele, Viale Rimembranza, 60, Pinerolo (TO)(IT)**

(74) Representative: **Lotti, Giorgio, c/o Ing. Barzanò & Zanardo Milano S.p.A. Via Cernaia 20, I-10122 Torino(IT)**

ACTORUM AG

## Description

This invention relates to a protection screening for rolling bearings as defined in the preamble of claim 1.

Document DE-A 1 525 188 discloses a protection screening for rolling bearings of this type, whereby the inner surface of the race of the bearing with which the screen forms a labyrinth seal is chamfered along the portion which said labyrinth seal is provided, thus forming a step with the remaining inner surface of the race.

This screening is formed of a composition of plastic material and plate; the plastic material has a portion which is intergaging with the chamfered portion of the inner race.

This feature results in high manufacturing costs and not easy installation.

The object of the inventoin is to overcome the above deficiencies providing a particularly efficient screening which results in reduced manufacturing costs and more reliable installation.

For attaining these objects the invention proposes to provide a protection screening for rolling bearings according to claim 1.

The subject-matter of the invention will now be described with reference to the annexed drawing which is a sectional view of a rolling bearing provided with a screening according to the invention.

A rolling bearing to a known type has an outer race 10, an inner race 11, balls 12, a cage 13 and two plate screens 14.

According to the invention, within the inner race 11 there are formed steps between the central portion 16 of its inner surface and the end portions 17 which are faced by the bent edges 18 of the screens 14.

The step 15 constitutes a barrier against the entry of the foreign matters of the bearing should they succeed in entering into the spece between edges 18 of the screen and the surface 17 of the inner race, but above all it forms a space 20 with the end of the edge 18 of the screen, in which the grease of the bearing tends to depose rather than slipping towards and beyond the seal 17–18 which would happen in the case of a smooth surface 16–17, as happens at the present time.

Still according to the invention, formed in the surface portions 17 are recesses 19 whose purpose is to form a container and retainer pocket for both the foreign matters which could penetrate into the bearing beyond the labyrinth seal and the grease which is contained in the bearing and which could escape outwards by surpassing the labyrinth seal.

Hence, if the grease passes beyond the stagnation space 20 it is stopped by the pocket 19, whilst the pocket 19 alone is sufficient to retain, besides the eventual grease, also the dust which tends to penetrate into the bearing through the seal 17–18.

Thus the combination of the step 15 and the pocket 19 fully attains the objects of the invention.

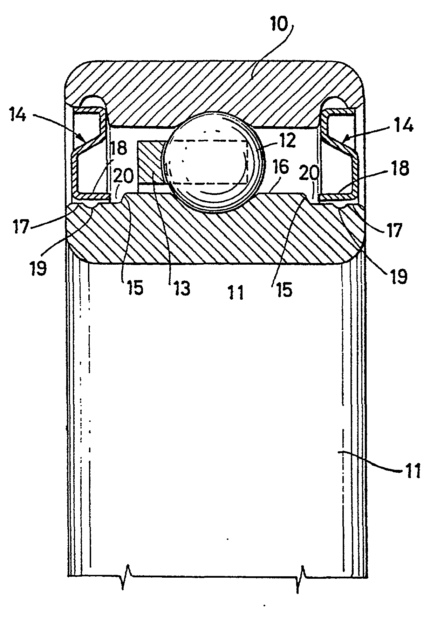

## Claims

1. A protection screening for rolling bearings comprising at least one screen (14) carried by one of the races (10) of the bearing and having a portion (18) positioned adjacent a surface (17) of the other race (II) to form a labyrinth seal whereby the inner surface (16) of the race (11) of the bearing, with which the screen (14) forms a labyrinth seal, is chamfered along the portion (17) in which said labyrinth seal is provided, thus forming a step (15) with the remaining inner surface (16) of the race (11), characterized in that the screen (14) has the form of a bent plate member with said portion (18) being defined by an edge thereof extending parallel to the chamfered portion (17) of the inner surface (16), in which surface is formed a recess (19) facing said edge (18); no portion intergaging in the recess (19) being provided on the edge (18).

2. A protection screening according to claim 1 characterized in that the end of the edge (18) of the screen (14) forms a small space (20) with the step (15) of the inner surface (16) of the race (11).

## Patentansprüche

1. Schutzelement für Wälzlager mit mindestens einem von einer der Laufbahnen (10) des Lagers gestützten Schutz (14) und mit einem Teil (18) in der Nähe einer Oberfläche (17) der anderen Laufbahn (11), sodaß eine Labyrinthdichtung entsteht, wobei die Innenfläche (16) der Laufbahn (11) des Lagers, mit der der Schutz (14) eine Labyrinthdichtung bildet, abgeschrägt ist längs des Teils (17), wo diese Labyrinthdichtung hineingeformt wurde, wodurch mit der restlichen Innenfläche (16) der Laufbahn (11) eine Stufe (15) entsteht, daduch gekennzeichnet, daß der Schutz (14) die Form einer gekrümmten Platte hat mit Teil (18), der durch deren Rand begrenzt wird; der Rand zieht sich parallel zum abgeschrägten Teil (17) der Innenfläche (16) hin, in die eine Aussparung (19) in Richtung besagten Rand (18) geschaffen wurde; am Rand (18) gibt es keine Überlappungen mit der Aussparung (19).

2. Schutzelement nach Anspruch 1 dadurch gekennzeichnet, daß das äußere Ende des Randes (18) des Schutzes (14) einen kleinen Raum (20) mit der Stufe (15) der Innenfläche (16) der Laufbahn (11) bildet.

## Revendications

1. Un dispositif de protection pour paliers à roulement comprenant au moins une protection (14) soutenue par une des pistes (10) du palier et ayant une partie (18) proche d'une surface (17) de l'autre piste (11) de façon à former une étanchéité à labyrinthe, dans lequel la surface intérieure (16) de la piste (11) du palier, avec laquelle la protection (14) forme une étanchéité à labyrinthe, est chanfreinée le long de la partie (17) dans laquelle l'étanchéité à labyrinthe susdite est réalisée en formant de cette façon une marche (15) avec la surface intérieure restante (16) de la piste (11), caractérisé du fait que la protection (14) est en forme d'élément à plaque courbée avec la partie susdite (18) définie par un bord de cette dernière qui s'étend parallèlement à la partie chanfreinée (17) de la surface intérieure (16) où un renfoncement (19), tourné vers le bord susdit (18), est réalisé; sur le bord (18) il n'y a aucune superposition avec le renfoncement (19).

2. Dispositif de protection selon la revendication 1 caractérisé du fait que l'extrémité du bord (18) de la protection (14) forme un petit espace (20) avec la marche (15) de la surface intérieure (16) de la piste (11).